# EUROPÄISCHE PATENTSCHRIFT

(11) **EP 1 800 968 B1**
(45) Veröffentlichungstag und Bekanntmachung des Hinweises auf die Patenterteilung: **24.02.2010**
(21) Anmeldenummer: 06025113.9
(22) Anmeldetag: 05.12.2006
(51) Int. Cl.: B60R 21/20

(54) **Baugruppe mit einem Gassackmodul und einer Verriegelungskontrolleinrichtung**
Airbag device with easy mount-dismount clip
Dispositif à coussin gonflable, avec agrafe facilitant le montage-démontage

(30) Priorität: 21.12.2005 DE 202005019961 U
(43) Veröffentlichungstag der Anmeldung: 27.06.2007
(73) Patentinhaber: TRW Automotive Safety Systems GmbH, 63743 Aschaffenburg (DE)
(72) Erfinder: Schütz, Dominik, 63857 Waldaschaff (DE)
(74) Vertreter: Mehnert, Bernhard

(56) Entgegenhaltungen:
- DE-A1- 4 414 761
- DE-U1- 20 219 124
- US-A- 5 380 037
- US-A1- 2005 230 942

## Beschreibung

Die Erfindung betrifft eine Baugruppe mit einem Gassackmodul und einer Verriegelungskontrolleinrichtung, mit einem ersten Rastelement, das zum Eingriff in ein zweites Rastelement zur Bildung einer Rastverbindung zur Befestigung des Gassackmoduls an einem fahrzeugfesten Bauteil ausgebildet ist, wobei das Gassackmodul einen nicht korrekt verriegelten Zustand einnehmen kann, in dem das erste Rastelement und das zweite Rastelement in Kontakt miteinander, aber nicht in korrektem Eingriff sind, und einen korrekt verriegelten Zustand, in dem das erste Rastelement in Eingriff mit dem zweiten Rastelement ist.

Gassackmodule, wie bei der DE 20219124 U1 gehören inzwischen zur serienmäßigen Ausstattung von Personenkraftwagen. Deshalb sollte natürlich ihre Montage ohne Abstriche bei der Sicherheit schnell und kostengünstig erfolgen können. Zu diesem Zweck bieten sich Rastverbindungen an, bei denen z.B. mit dem Gassackmodul verbundene Rasthaken in ein komplementäres Rastelement an einem fahrzeugfesten Bauteil, z.B. einem Federdraht, eingreifen, um das Gassackmodul fest und lasttragend mit dem Fahrzeug zu verbinden. Eine solche Rastverbindung läßt sich sehr zeitsparend herstellen. Jedoch könnte sich bei Rastverbindungen dieser Art ein nicht korrekt verriegelter Zustand einstellen, bei dem die Rastelemente zwar bereits in Kontakt miteinander sind, der Rasthaken aber den Federdraht noch nicht korrekt hintergriffen hat. Da der Verriegelungsmechanismus in der Regel von außen nicht einsehbar ist, sind derartige Fehlverriegelungen schwer zu erkennen. Es muß natürlich sichergestellt sein, daß die Rastverbindung korrekt geschlossen und das Gassackmodul fest im Fahrzeug fixiert ist. Das Überprüfen kostet Zeit und verteuert damit die Montage. Es ist also anzustreben, eine Möglichkeit zu schaffen, derartige nicht korrekt verriegelte Rastverbindungen schnell und einfach zu erkennen.

Die Erfindung sieht hierzu bei einer oben genannten Baugruppe vor, daß die Verriegelungskontrolleinrichtung ein beweglich angeordnetes Kontrollelement umfaßt, und ein Abschnitt des Kontrollelements im nicht korrekt verriegelten Zustand des Gassackmoduls eine erste Position einnimmt und im korrekt verriegelten Zustand des Gassackmoduls eine zweite Position einnimmt und das Kontrollelement in der ersten Position im montierten Zustand und von außen gesehen eine erste Indikatorstellung und in der zweiten Position eine von der ersten Indikatorstellung verschiedene zweite Indikatorstellung einnimmt und eine Anzeige für ein sich nicht im korrekt verriegelten Zustand befindendes Gassackmodul bildet. Im Gegensatz zur eigentlichen Rastverbindung läßt sich das Kontrollelement von außen, etwa von der Außenseite eines Verkleidungsteils, hinter dem die Rastverbindung angeordnet ist, z.B. visuell erkennen oder ertasten. Auf diese Weise kann der Zustand der Rastverbindung ohne direkten Zugang zu dieser überprüft werden. Somit ist klar, daß bei Vorhandensein bzw. Nichtvorhandensein des Kontrollelements an einer bestimmten Stelle die Rastverbindung nicht korrekt verriegelt ist.

Das Kontrollelement kann z.B. nur in der ersten oder nur in der zweiten Position einen Abschnitt eines Verkleidungsteils nach außen drücken, z.B. ausbeulen.

Das Kontrollelement ragt alternativ nur in der ersten oder nur in der zweiten Position durch eine Öffnung in einem Verkleidungsteil hindurch.

In beiden Fällen ist optisch oder haptisch die Position des Kontrollelements erfaßbar, wodurch eine Kontrolle der Rastverbindung möglicht wird.

In einer bevorzugten Ausführungsform der Erfindung ist das Kontrollelement durch einen Abschnitt des zweiten Rastelements gebildet. Alternativ kann es durch ein separates, mit dem zweiten Rastelement gekoppeltes Bauteil gebildet sein.

Das zweite Rastelement ist vorzugsweise verschieblich angeordnet. Vorteilhaft wird die Stellung des Kontrollelements durch die Bewegung des zweiten Rastelements verändert.

Beim zweiten Rastelement kann es sich z.B. um einen Federdraht oder um eine mehr oder minder starre Platte handeln, die dann vorzugsweise elastisch beaufschlagt ist.

Zur Herstellung der Rastverbindung wird das zweite Rastelement durch das erste Rastelement zunächst ausgelenkt, bevor der eigentliche Rasteingriff erfolgt. Im nicht korrekt verriegelten Zustand bleibt die Auslenkung des zweiten Rastelements bestehen. Erfindungsgemäß wird diese Auslenkung des zweiten Rastelements ausgenutzt, um eine Anzeige für eine nicht korrekt geschlossene Rastverbindung und somit ein sich nicht im korrekt verriegelten Zustand befindendes Gassackmodul zu schaffen.

Eine derartige Kontrolle bietet sich z.B. für Gassackmodule an, die in ein Lenkrad eingesetzt sind.

Weitere Merkmale und Vorteile der Erfindung ergeben sich aus der nachfolgenden Beschreibung eines Ausführungsbeispiels in Verbindung mit den beigefügten Zeichnungen. In diesen zeigen:
- Figur 1 einen schematischen Ausschnitt aus einer erfindungsgemäßen Baugruppe mit einem Gassackmodul in einem nicht korrekt verriegelten Zustand; und
- Figur 2 die Baugruppe mit dem Gassackmodul aus Figur 1 im korrekt verriegelten Zustand.

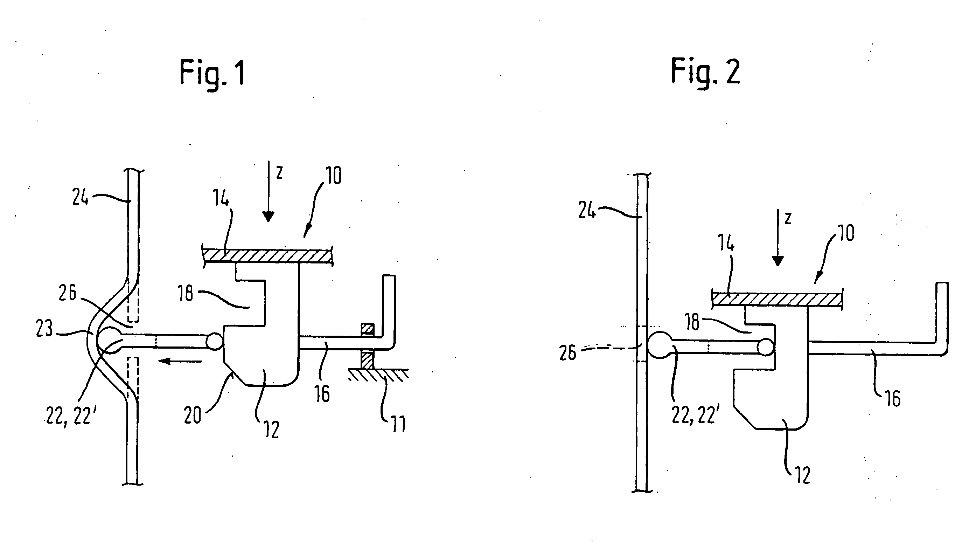

In Figur 1 ist eine Baugruppe mit einem Gassackmodul 10 dargestellt. Es ist eine Rastverbindung zwischen einem Gassackmodul 10 und einem fahrzeugfesten Bauteil 11 gezeigt. Das Gassackmodul 10 ist lediglich durch eines seiner ersten Rastelemente 12, hier einen Rasthaken, sowie eine damit verbundene Bodenplatte 14, z.B. einem Generatorträger, eines nicht näher dargestellten, bekannten Modulgehäuses angedeutet. Im Modulgehäuse befinden sich ein (nicht gezeigter) gefalteter Gassack sowie ein (ebenfalls nicht gezeigter) Gasgenerator, der Füllgas für das Aufblasen des Gassacks bereitstellt. Auch das fahrzeugfeste Bauteil 11 ist nur schematisch gezeigt. Hier kann es sich z.B. um eine Nabe eines Lenkrads, eine Montageplatte vorderhalb der Lenkradnabe oder einen Abschnitt einer Instrumententafel handeln. Dies alles sind bekannte Elemente, auf die hier nicht weiter eingegangen wird.

Am fahrzeugfesten Bauteil 11 ist ein zweites Rastelement 16 befestigt. Das zweite Rastelement 16, hier ein Federdraht, hat wenigstens einen elastisch auslenkbaren oder verschieblich angeordneten Abschnitt, der bei der Herstellung einer Rastverbindung zwischen dem ersten Rastelement 12 und dem zweiten Rastelement 16 vorübergehend zur Seite bewegt wird und schließlich mit einer Rastausnehmung 18 des ersten Rastelements 12 in Eingriff kommt. Bei dem zweiten Rastelement 16 kann es sich auch um eine starre Platte handeln, die mittels einer Feder (nicht dargestellt) in seitlicher Richtung verschiebbar beaufschlagt ist. Auch andere Formen des zweiten Rastelements 16, bei denen ein Abschnitt des zweiten Rastelements 16 auslenkbar ist, sind hier einsetzbar.

Zur Herstellung der Rastverbindung wird das Gassackmodul 10 in z-Richtung auf das zweite Rastelement 16 zu bewegt. Hierbei kommt eine Anlaufschräge 20 des ersten Rastelements 12 in Kontakt mit dem verschiebbaren Abschnitt des zweiten Rastelements 16 und bewegt diesen zur Seite (nach links in Fig. 1, siehe Pfeil).

Es kann nun vorkommen, daß die beiden Rastelemente 12, 16 in der in Figur 1 gezeigten Position verharren, in der sich die Rastverbindung und somit auch das Gassackmodul 10 im nicht korrekt verriegelten Zustand befindet. Das zweite Rastelement 16 ist ausgelenkt, hat aber noch nicht in die Rastausnehmung 18 des ersten Rastelements **12** eingegriffen.

Um diesen Fall erkennen zu können, ist in der Baugruppe eine Verriegelungskontrolleinrichtung mit einem Kontrollelement 22 vorgesehen. Im hier gezeigten Beispiel ist das Kontrollelement 22 durch einen Teil des zweiten Rastelements 16, hier den am weitesten nach links ragenden Abschnitt, gebildet. Das Kontrollelement 22 folgt der seitlichen Bewegung des zweiten Rastelements 16. Befindet sich das Gassackmodul 10 im nicht korrekt verriegelten Zustand, befindet sich das Kontrollelement 22 in einer ersten Position (gezeigt in Fig. 1), nämlich seitlich nach links ausgelenkt. Das Kontrollelement 22 muß nicht einstückiger Teil des zweiten Rastelement 16 sein, es könnte auch ein separates, mit diesem gekoppeltes Bauteil 22' sein (in den Figuren durch die punktierte Linie angedeutet).

Das Kontrollelement 22 ist so angeordnet, daß es bei seiner in Figur 1 gezeigten maximalen Auslenkung einen Abschnitt 23 eines Verkleidungsteils 24 ausbeult.

Alternativ kann das Kontrollelement 22 auch durch eine Öffnung 26 im Verkleidungsteil 24 hindurchragen (in Fig. 1 in gestrichelten Linien gezeigt).

Nur in dieser ersten Position drückt das Kontrollelement 22 das Verkleidungsteil 24 nach außen oder ragt durch die Öffnung 26 im Verkleidungsteil 24. Im montierten Zustand und von außen (z.B. von außerhalb des Verkleidungsteils 24), d.h. vom Fahrzeuginnenraum, gesehen befindet sich das Kontrollelement 22 jetzt in einer ersten Indikatorstellung, die einen Verriegelungszustand der Rastverbindung anzeigt. In diesem Fall zeigt es in der ersten Indikatorstellung durch die Ausbeulung des Verkleidungsteils 24 bzw. durch den durch die Öffnung 26 hindurchragenden Abschnitt des Kontrollelements 22 an, daß sich das Gassackmodul 10 im nicht korrekt verriegelten Zustand befindet.

Durch das elastische Verkleidungsteil 24 kann die Rückstellkraft für das zweite Rastelement 16 unterstützt oder vollständig erzeugt werden.

Das Verkleidungsteil 24 ist z.B. die äußere Verkleidung eines Nabentopfes eines Lenkrades oder die äußere Verkleidung eines Armaturenbrettes bzw. ein Teil einer Außenhaut einer Sitzrückenlehne. In jedem Fall ist der Abschnitt 23 des Verkleidungsteils 24 von außen, d.h. von außerhalb der Verkleidung vom Fahrzeuginneren her, einsehbar oder ertastbar.

Im korrekt verriegelten Zustand des Gassackmoduls 10, der in Figur 2 gezeigt ist, greift hingegen der bewegliche Abschnitt des zweiten Rastelements 16 in die Rastausnehmung 18 des ersten Rastelements 12 ein. Gegenüber der in Figur 1 gezeigten Situation hat sich der bewegliche Abschnitt des zweiten Rastelements 16 wieder nach rechts verschoben. Hierdurch ist jetzt das Kontrollelement 22 in seiner zweiten Position, in der es das Verkleidungsteil 24 nicht ausbeult bzw. nicht durch die Öffnung 26 im Verkleidungsteil 24 hindurchragt.

Im montierten Zustand und von außen, d.h. vom Fahrzeuginnenraum, gesehen befindet sich das Kontrollelement 22 jetzt in einer zweiten Indikatorstellung, die einen Verriegelungszustand der Rastverbindung anzeigt, in diesem Fall, daß sich das Gassackmodul 10 im korrekt verriegelten Zustand befindet.

Natürlich könnte das Kontrollelement 22 auch so ausgebildet und angeordnet sein, daß die Situation umgekehrt ist: dann würde im korrekt verriegelten Zustand (was der zweiten Indikatorstellung entspricht) das Kontrollelement 22 bzw. das Bauteil 22' das Verkleidungsteil 24 ausbeulen oder durch die Öffnung 26 ragen, während im nicht korrekt verriegelten Zustand (was der ersten Indikatorstellung enspricht) das Kontrollelement 22 bzw. das Bauteil 22' nicht ertastbar oder nicht sichtbar wäre. In jedem Fall ist die zweite Indikatorstellung von der ersten verschieden.

Es wäre auch denkbar, das Kontrollelement 22 entfernbar zu gestalten. Hier bietet es sich an, als Kontrollelement 22 wie oben beschrieben ein separates Bauteil 22' zu verwenden. Bei korrekt verriegeltem Gassackmodul 10 befindet sich dann das Kontrollelement 22 in der ersten Stellung, in der es durch die Öffnung 26 ragt und kann aus dem Gassackmodul entfernt werden. Hier ist es natürlich auch möglich, eine Kodierung vorzusehen, um später einen Nachweis darüber zu führen, daß diese spezielle Rastverbindung korrekt verriegelt war.

Wenn das Kontrollelement 22 das Verkleidungsteil 24 auslenkt oder ausbeult, ist das Verkleidungsteil 24 vorzugsweise flexibel aus Polyurethan ausgebildet.

Selbstverständlich könnte auch umgekehrt das erste Rastelement 12 verschieblich oder auslenkbar und das zweite Rastelement 16 fest angeordnet sein. In diesem Fall könnte das Kontrollelement 22 am ersten Rastelement 12 ausgebildet bzw. mit diesem gekoppelt sein. Ebenso lassen sich beide Rastelemente 12, 16 auslenkbar oder verschieblich ausbilden. Auch eine vertikale Auslenkung des ersten bzw. zweiten Rastelements 12, 16 wäre ausnutzbar.

Auch wenn in der beschriebenen Ausführungsform das zweite Rastelement 16 am fahrzeugfesten Bauteil 11 angeordnet gezeigt ist, liegt es natürlich im Ermessen des Fachmanns, die Rastelemente 12, 16 auszutauschen und das zweite Rastelement 16 statt dessen am Gassackmodul 10 anzuordnen.

## Patentansprüche

1. Baugruppe mit einem Gassackmodul und einer Verriegelungskontrolleinrichtung,
mit einem ersten Rastelement (12), das zum Eingriff in ein zweites Rastelement (16) zur Bildung einer Rastverbindung zur Befestigung des Gassackmoduls (10) an einem fahrzeugfesten Bauteil (11) ausgebildet ist,
wobei das Gassackmodul (10) einen nicht korrekt verriegelten Zustand einnehmen kann, in dem das erste Rastelement (12) und das zweite Rastelement (16) in Kontakt miteinander, aber nicht in korrektem Eingriff sind, und einen korrekt verriegelten Zustand, in dem das erste Rastelement (12) in Eingriff mit dem zweiten Rastelement (16) ist,
**dadurch gekennzeichnet, daß** die Verriegelungskontrolleinrichtung ein beweglich angeordnetes Kontrollelement (22) umfaßt, und ein Abschnitt des Kontrollelements (22) im nicht korrekt verriegelten Zustand des Gassackmoduls (10) eine erste Position einnimmt und im korrekt verriegelten Zustand des Gassackmoduls (10) eine zweite Position einnimmt und
das Kontrollelement (22) in der ersten Position im montierten Zustand und von außen gesehen eine erste Indikatorstellung und in der zweiten Position eine von der ersten Indikatorstellung verschiedene zweite Indikatorstellung einnimmt und eine Anzeige für ein sich nicht im korrekt verriegelten Zustand befindendes Gassackmodul (10) bildet.

2. Baugruppe nach Anspruch 1, **dadurch gekennzeichnet, daß** das Kontrollelement (22) nur in der ersten oder nur in der zweiten Position einen Abschnitt eines Verkleidungsteils (24) nach außen drückt.

3. Baugruppe nach Anspruch 1, **dadurch gekennzeichnet, daß** das Kontrollelement (22) nur in der ersten oder nur in der zweiten Position durch eine Öffnung (26) in einem Verkleidungsteil (24) hindurchragt.

4. Baugruppe nach einem der vorhergehenden Ansprüche, **dadurch gekennzeichnet, daß** das Kontrollelement (22) durch einen Abschnitt des zweiten Rastelements (16) gebildet ist.

5. Baugruppe nach einem der Ansprüche 1 bis 3, **dadurch gekennzeichnet, daß** das Kontrollelement (22) durch ein separates, mit dem zweiten Rastelement (16) gekoppeltes Bauteil (22') gebildet ist.

6. Baugruppe nach einem der vorhergehenden Ansprüche, **dadurch gekennzeichnet, daß** das zweite Rastelement (16) verschieblich angeordnet ist.

7. Baugruppe nach einem der vorhergehenden Ansprüche, **dadurch gekennzeichnet, daß** das zweite Rastelement (16) ein Federdraht oder eine Platte ist.

8. Baugruppe nach einem der vorhergehenden Ansprüche, **dadurch gekennzeichnet, daß** das zweite Rastelement (16) bei der Herstellung der Rastverbindung (12, 16) seitlich ausgelenkt wird und im nicht korrekt verriegelten Zustand des Gassackmoduls (10) diese Auslenkung bestehen bleibt.

9. Baugruppe nach einem der vorhergehenden Ansprüche, **dadurch gekennzeichnet, daß** das Gassackmodul (10) in ein Lenkrad eingesetzt ist.

## Claims

1. An assembly having an airbag module and a locking check means,
having a first catch element (12), which is designed to engage in a second catch element (16) to form a snap-in connection for fastening the airbag module (10) to a component (11) fixed to the vehicle,
it being possible for the airbag module (10) to assume an incorrectly locked state, in which the first catch element (12) and the second catch element (16) are in contact with one another but not in correct engagement, and a correctly locked state, in which the first catch element (12) is in engagement with the second catch element (16),
**characterised in that** the locking check means comprises a movably arranged check element (22), and one portion of the check element (22) assumes a first position when the airbag module (10) is in the incorrectly locked state and a second position when the airbag module (10) is in the correctly locked state and,
in the mounted state and when viewed from the outside, the check element (22) assumes a first indicator position in the first position and a second indicator position different from the first indicator position in the second position, so indicating if the airbag module (10) is not in the correctly locked state.

2. An assembly according to claim 1, **characterised in that** the check element (22) presses a portion of a trim part (24) outwards only in the first or only in the second position.

3. An assembly according to claim 1, **characterised in that** the check element (22) projects through an opening (26) in a trim part (24) only in the first or only in the second position.

4. An assembly according to any one of the preceding claims, **characterised in that** the check element (22) is formed by a portion of the second catch element (16).

5. An assembly according to any one of claims 1 to 3, **characterised in that** the check element (22) is formed by a separate component (22') coupled to the second catch element (16).

6. An assembly according to any one of the preceding claims, **characterised in that** the second catch element (16) is arranged so as to be displaceable.

7. An assembly according to any one of the preceding claims, **characterised in that** the second catch element (16) is a spring wire or a plate.

8. An assembly according to any one of the preceding claims, **characterised in that** the second catch element (16) is deflected laterally when the snap-in connection (12, 16) is produced and this deflection persists in the incorrectly locked state of the airbag module (10).

9. An assembly according to any one of the preceding claims, **characterised in that** the airbag module (10) is inserted into a steering wheel.

## Revendications

1. Unité avec un module d'airbag et un dispositif de contrôle du verrouillage,
avec un premier élément d'encliquetage (12), qui est réalisé pour s'agripper dans un deuxième élément d'encliquetage (16) pour la réalisation d'un assemblage encliqueté destiné à la fixation du module d'airbag (10) à une pièce (11) fixe du véhicule,
le module d'airbag (10) pouvant occuper un état incorrectement verrouillé, dans lequel le premier élément d'encliquetage (12) et le deuxième élément d'encliquetage (16) sont en contact l'un avec l'autre, mais sans être correctement agrippés et un état correctement verrouillé, dans lequel le premier élément d'encliquetage (12) est agrippé au deuxième élément d'encliquetage (16),
**caractérisée en ce que** le dispositif de contrôle du verrouillage comprend un élément de contrôle (22) disposé de manière mobile et une section de l'élément de contrôle (22) occupe, dans l'état incorrectement verrouillé du module d'airbag (10) une première position et, dans l'état correctement verrouillé du module d'airbag (10) une deuxième position et
l'élément de contrôle (22) occupe, dans la première position à l'état monté et vu de l'extérieur, une première position d'indicateur et, dans la deuxième position, une deuxième position d'indicateur différente de la première position d'indicateur et forme une indication pour un module d'airbag (10) se trouvant dans un état incorrectement verrouillé.

2. Unité selon la revendication 1, **caractérisée en ce que** l'élément de contrôle (22) pousse une section d'un élément d'habillage (24) vers l'extérieur uniquement dans la première position ou uniquement dans la deuxième position.

3. Unité selon la revendication 1, **caractérisée en ce que** l'élément de contrôle (22) s'avance au travers d'une ouverture (26) dans un élément d'habillage (24) uniquement dans la première position ou uniquement dans la deuxième position.

4. Unité selon l'une quelconque des revendications précédentes, **caractérisée en ce que** l'élément de contrôle (22) est formé par une section du deuxième élément d'encliquetage (16).

5. Unité selon l'une quelconque des revendications 1 à 3, **caractérisée en ce que** l'élément de contrôle (22) est formé par une pièce (22') séparée, couplée au deuxième élément d'encliquetage (16).

6. Unité selon l'une quelconque des revendications précédentes, **caractérisée en ce que** le deuxième élément d'encliquetage (16) est disposé de manière à pouvoir être déplacé.

7. Unité selon l'une quelconque des revendications précédentes, **caractérisée en ce que** le deuxième élément d'encliquetage (16) est un fil à ressort ou une plaque.

8. Unité selon l'une quelconque des revendications précédentes, **caractérisée en ce que** le deuxième élément d'encliquetage (16) est écarté latéralement lors de la réalisation de l'assemblage encliqueté (12, 16) et cet écartement continue d'exister dans l'état incorrectement verrouillé du module d'airbag (10).

9. Unité selon l'une quelconque des revendications précédentes, **caractérisée en ce que** le module d'airbag (10) est monté dans un volant.
